# EUROPEAN PATENT APPLICATION

(11) **EP 4 796 314 A1**
(43) Date of publication of application: **26.08.2026**
(21) Application number: 26155792.0
(22) Date of filing: 02.02.2026
(51) Int. Cl.: B32B 7/12, B32B 15/08, B32B 15/12, B32B 27/08, B32B 27/10, B32B 27/32, B32B 29/00

(54) **A PACKAGING MATERIAL, AND METHODS AND SYSTEMS FOR MANUFACTURING SUCH PACKAGING MATERIAL**

(30) Priority: 19.02.2025 EP 25158744
(71) Applicant: Tetra Laval Holdings & Finance S.A., 1009 Pully (CH)
(72) Inventor: PERSSON, Fredrik, 221 86 Lund (SE)
(74) Representative: Tetra Pak Patent Attorneys

(57) **Abstract**

A laminated packaging material (10) is provided. The laminated packaging material comprises a cellulose based base layer (20) and a polymer multilayer (34), wherein at least a first polymer layer (36) of the polymer multilayer (34) comprises recycled polymer. Further, a packaging container (2), a method (200) for producing a laminated packaging material (10), and a lamination system (100) are provided.

## Description

### Technical Field

The invention relates to a packaging material used to form individual packaging containers. The present invention also relates to a method for manufacturing a packaging material.

### Background Art

Packaging material is commonly used to produce packaging containers. Specific developments have been made with regards to packaging material being suitable to form individual packaging containers for liquid food, such as dairy products, juice, etc.

Packaging containers of the single use carton type for liquid foods are often produced from a packaging laminate based on paperboard or carton. One such commonly occurring packaging container is marketed under the trademark Tetra Brik^{®} Aseptic and is principally employed for aseptic packaging of liquid foods such as milk, fruit juices etc, sold for long term ambient storage. The packaging material in this known packaging container is typically a laminate comprising a bulk or base layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional barrier layer, e.g. an aluminium foil.

On the inside of the laminate, i.e. the side intended to face the filled food contents of a container produced from the laminate, there is an innermost layer, applied onto the barrier layer. The innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube, such that the two longitudinal edges of the web are united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold forming along prepared crease lines in the packaging material.

The main advantage of this continuous tube-forming, filling and sealing packaging method concept is that the web may be sterilized continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperatures, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of a laminated packaging material. From a tubular blank of the packaging material that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package.

An average packaging container may be formed by a packaging material comprising approximately 70% paperboard, 25% plastic material, and 5% aluminium. Existing recycling systems have proven to be very efficient in responsible handling of the waste, typically involving a first step of loading the used packaging containers in a pulper and blending with water, thereby separating the material of the bulk layer from the plastic and possibly metal material. Additional processes have been developed to recycle material mixes into raw materials, for example separating high density polyethylene (HDPE), low density polyethylene (LDPE), and metal material from each other.

Although a great potential is seen in paper-based, barrier laminated packaging materials for replacing the aluminium-foil based packaging laminates for liquid and wet food carton packaging, e.g. regarding increasing the recyclability and environmental sustainability of materials used, there is a need to further improve such and similar laminated packaging materials, in terms or recycling abilities. In particular, the quality of the raw material resulting from recycled packaging material has not been sufficient for re-use in new packaging material production processes.

There is therefore a need to provide an improved laminated paper-based material for packaging containers used for liquid, semi-liquid and viscous food products, which improves the possibility for a more circular and sustainable production.

### Summary

It is an object of the invention to at least partly overcome one or more of the above-identified limitations of the prior art. To this end, according to a first aspect, there is provided a laminated packaging material comprising a cellulose based base layer and a polymer multilayer, wherein at least a first polymer layer of the polymer multilayer comprises recycled polymer.

This is advantageous in that the incorporation of a recycled polymer allows for a packaging material that is more environmentally sustainable and more cost-efficient. Further, by providing the recycled polymer as part of a polymer multilayer it is possible to have higher grade polymer of the polymer multilayer to interface with the remaining parts of the packaging material. This reduces the need for possible process and/or equipment modifications.

The cellulose base layer may provide the packaging material with structural strength, which helps a package made from the packaging material maintain its integrity during storage and transportation. The first polymer layer may be covered on a first side by a second polymer layer of the polymer multilayer. Thereby, the second polymer layer effectively shields the recycled polymer material, e.g. from any food contained within a package made from the packaging material, or from any environmental conditions in which such a package is stored. This allows for the use of lower quality recycled polymer raw material in more types of packages in a safe manner. This also makes it possible to use more recycled polymer raw material in the production of packaging material, which increases the environmental and financial sustainability of the packaging material.

The second polymer layer may be made from a different material than the first polymer layer. The first side of the first polymer layer may be arranged in a plane facing outwards or inwards of a package made from the packaging material.

The first polymer layer may be covered on a second side by a third polymer layer of the polymer multilayer. Thereby, the first polymer layer may be entirely embedded between the second and third polymer layers. The third polymer layer effectively shields the recycled polymer material, e.g. from any food contained within a package made from the packaging material, or from any environmental conditions in which such a package is stored. This allows for the use of lower quality recycled polymer raw material in more types of packages in a safe manner. This makes it possible to use more recycled polymer raw material in the production of packaging material, which increases the environmental and financial sustainability of the packaging material.

The third polymer layer may be made from a different material or the same material as the second polymer layer. The second side may be arranged in a plane opposite to the first side. The third polymer may be the same as the second polymer or different to the second polymer.

The second polymer layer and/or the third polymer layer of the polymer multilayer may comprise virgin polymer. This is advantageous in that it allows for the use of recycled polymer raw material while making sure that any product contained within a package made from the packaging material only may come into contact with virgin polymer, although that is not likely possible in such packaging materials. Furthermore, virgin polymer may be easier, more reliable, or more efficient to bond with additional layers in the laminated packaging material; so by covering at least one side of the first polymer layer with a polymer layer comprising virgin polymer the resulting packaging material may be more robust, more versatile, and more sustainable.

The second polymer layer and/or the third polymer layer of the polymer multilayer may consist of virgin polymer and/or comprise no recycled polymer.

The first polymer layer of the polymer multilayer may consist of recycled polymer. This is advantageous in that having the first polymer layer consisting entirely of recycled polymer increases the amount of recycled polymer used in the packaging material, which increases the environmental sustainability of the packaging material. It is also advantageous in that it eliminates the need to mix the recycled polymer with another polymer prior to production of the packaging material, which reduces the complexity of production.

The recycled polymer may comprise a mechanically and/or a chemically recycled polymer, preferably the recycled polymer may be post-consumer recycled polymer. This is advantageous since the use of a post-consumer recycled polymer increases the environmental sustainability of the packaging material.

Mechanically and chemically recycled polymers are currently accessible, but polymers recycled in other ways can also be used.

The recycled polymer may be recycled polyethylene, preferably low-density polyethylene (LDPE), more preferably linear low-density polyethylene (LLDPE). This is advantageous in that LLDPE has a higher tensile strength and a higher puncture resistance than branched LDPE. These properties of LLDPE allow for the use of thinner films in the laminate, reducing the amount of polymer needed for the production of the packaging material, which increases the environmental sustainability of the packaging material.

The first polymer layer of the polymer multilayer may comprise tubular LLDPE, or a combination of tubular LLDPE and autoclave LLDPE. This is advantageous in that it allows for the use of recycled LLDPE made using either the tubular process or the autoclave process, or a combination of both. Furthermore, it allows for fine-tuning a mixture of autoclave LLDPE and tubular LLDPE based on the desired properties of the laminated packaging material. Tubular LLDPE and autoclave LLDPE are currently accessible, but LLDPE produced in other ways may also be used.

The laminated packaging material may further comprise a barrier layer, and the polymer multilayer may be arranged i) onto the base layer to form an exterior layer of the packaging material, and/or ii) between the base layer and the barrier layer to form a lamination layer, and/or iii) onto the barrier layer to form an interior layer of the packaging material.

One, two, or three of these arrangements may apply simultaneously.

The barrier layer is advantageous in that it protects a product inside a package made from the packaging material from oxygen, light, and microorganisms.

The polymer multilayer may form an exterior layer of the packaging material, which is advantageous in that it prevents the recycled polymer layer from getting into contact with the surrounding environment and the printed material.

The polymer multilayer may form a lamination layer of the packaging material, which is advantageous in that it allows for recycled material to be used in the lamination layer, which increases the amount of recycled material used, without interfering with the lamination and/or adhesion of the different layers of the packaging material.

The polymer multilayer may form an interior layer of the packaging material, which is advantageous in that the structure of the polymer multilayer does not allow the recycled polymer to get into contact with a product contained within a package made from the packaging material.

The barrier layer may be at least one of a metallic layer, a cellulose layer having a metal coated side surface, and a polymer layer having a metal coated side surface. This type of barrier layer allows for long-term storage in ambient conditions. The metallic layer may act as a barrier for e.g. light, oxygen, and microorganisms.

The cellulose layer may provide the packaging material with structural strength, which helps a package made from the packaging material maintain its integrity during storage and transportation; and also increasing the recyclable cellulose amount of the final package that has already a cellulose based base layer. The metal coat of the metal coated side surface of the cellulose layer may be arranged in a plane facing outwards or inwards of a package made from the packaging material.

The polymer layer may act as a moisture seal. The metal coat of the metal coated side surface of the polymer layer may be arranged in a plane facing outwards or inwards of a package made from the packaging material.

According to a second aspect of the invention, there is provided a packaging container, comprising a body formed by folding and sealing a packaging material according to the first aspect of the invention.

This type of package is advantageous in that it allows for long-term ambient storage of wet products and exhibiting improved sustainability..

According to a third aspect of the invention, there is provided a method for producing a laminated packaging material, wherein the method comprises providing a cellulose based base layer; and applying a polymer multilayer, wherein at least a first polymer layer of the polymer multilayer comprises recycled polymer.

Incorporating recycled polymer in a packaging material in this manner is advantageous in that it makes the packaging material more environmentally sustainable and more cost-efficient.

The cellulose based base layer may provide the packaging material with structural integrity.

The method may comprise co-extruding the first polymer layer with a second polymer layer and/or a third polymer layer of the polymer multilayer.

Co-extrusion in this way is advantageous in that it allows for simultaneous extrusion of several polymers into the polymer multilayer, thereby increasing the efficiency of production.

The method may further comprise co-extruding the first polymer layer with a second polymer layer and a third polymer layer of the polymer multilayer, wherein the second polymer layer and the third polymer layer are co-extruded on opposite sides of the first polymer layer.

Co-extrusion allows for simultaneous extrusion of several polymer layers into the polymer multilayer, thereby increasing the efficiency of production. Co-extruding the recycled polymer with a second and a third polymer layer on opposite sides of the recycled polymer layer is advantageous in that the second and third polymer layers encapsulate the recycled polymer layer, thereby decreasing the demands on the quality of the recycled polymer raw material.

According to a fourth aspect of the invention, there is provided a lamination system configured to produce a laminated packaging material. The lamination system comprises at least one nip, each nip formed between two adjacent rollers; a base layer feeding unit providing a supply of a cellulose based base layer to one of said at least one nip; and an extrusion device providing a polymer multilayer comprising at least a first polymer layer comprising recycled polymer, wherein the extrusion device feeds the polymer multilayer to one of said at least one nip.

The lamination system is advantageous in that it allows for efficient production of the laminated packaging material.

The nip may be referred to as a lamination nip and is used to press two or more sheets together to form a laminated product. Other means of laminating two or more sheets together to form a laminated product may also be used.

The extrusion device may comprise a co-extrusion unit. This is advantageous in that it allows for simultaneous extrusion of several polymer layers into the polymer multilayer, which increases the efficiency of production.

The co-extrusion unit may be configured to extrude the first, the second, and the third polymer layers into the polymer multilayer in such a way that the first recycled polymer layer gets encapsulated between the second and the third polymer layers.

The co-extrusion unit may be configured to extrude several polymer layers into the polymer multilayer in such a way that the first recycled polymer layer gets coated with the second and/or the third polymer on one or both sides.

The co-extrusion unit may be configured to extrude the first polymer layer, and a second and third polymer layer arranged on opposite sides of the first polymer layer.

Extruding the polymer multilayer in this way ensures that the recycled polymer layer is encapsulated between the second and the third polymer layers, thereby decreasing the demands on quality of the recycled polymer layer.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which:
Fig. 1 is a schematic side view of a machine for producing packaging containers for liquid food products from a laminated packaging material according to one embodiment;
Fig. 2a is a perspective view of a packaging container according to one embodiment;
Fig. 2b is a top view of a packaging material according to a further embodiment,
Fig. 3a is an exploded schematic cross-sectional view of a packaging material according to one embodiment;
Fig. 3b is a schematic cross-sectional view of a packaging material according to a further embodiment;
Fig. 3c is a schematic cross-sectional view of a packaging material according to a further embodiment;
Fig. 4 is a schematic side view of a packaging material lamination system according to one embodiment;
Fig. 5 is a schematic view of a co-extrusion unit according to one embodiment; and
Fig. 6 is a flowchart representing a method for producing a laminated packaging material according to one embodiment.

### Detailed description

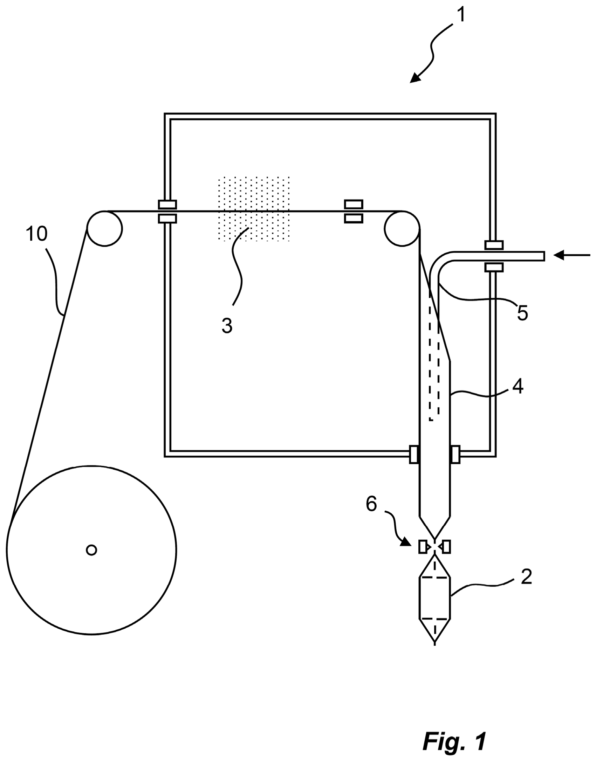

Fig. 1 illustrates an example of a machine 1 for producing packaging containers 2 from a laminated packaging material 10.

The machine 1 comprises a sterilization section 3 configured to sterilize the laminated packaging material 10 normally being roll-fed into the machine 1. Downstream of the sterilization section 3 there is a tube-forming section 4 which seals the longitudinal ends of the laminated packaging material 10 to each other. A filling section 5 is configured to fill the longitudinal tube with the desired content, and a transversal sealing section 6 provides transversal seals and cuts to separate the packaging container 2 from the upstream tube of laminated packaging material 10.

It should be noted that while the machine 1 shown in Fig. 1 has proven to be very effective in producing individual packaging containers 2, generally the same packaging material 10 can be used for other machines operating according to different principles. For example, the packaging material 10 may be cut into separate blanks being fed into a machine which operates by folding and sealing tubular bodies having one closed end and one open end. After filling the tubular body, the open end is closed in order to form a sealed packaging container 2.

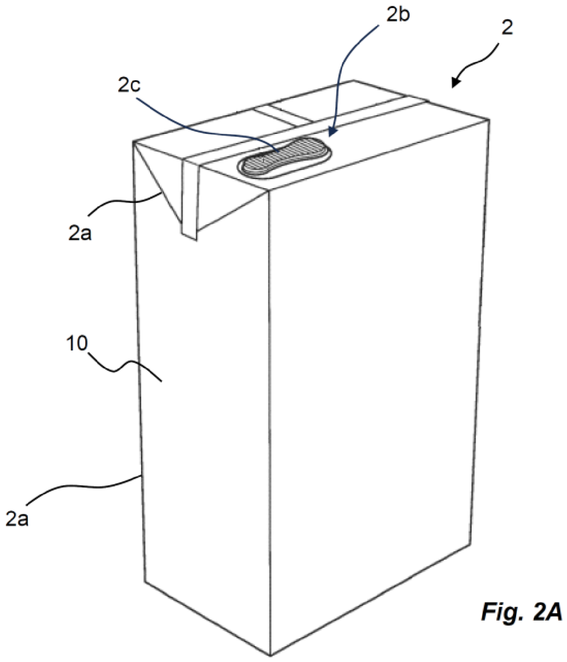

An example of a packaging container 2 is shown in Fig. 2a. The packaging container 2 is produced by folding, forming, and sealing a packaging material 10 as is well known in the art. In order to assist in folding and forming, the packaging material 10 has been provided with sets of crease lines 2a (only some being indicated with reference numeral). For improving usability by the consumer, the packaging container 2 may be provided with an opening feature 2b. The opening feature 2b is here represented as an area of the packaging material 10 which is configured to be penetrated for opening the packaging container 2 in order to access the content. In Fig. 2a the opening feature 2b is formed by a laminated through hole in the packaging material 10, which is covered by a tab 2c. When opening the tab 2c for the first time, the opening feature 2b can be subsequently opened.

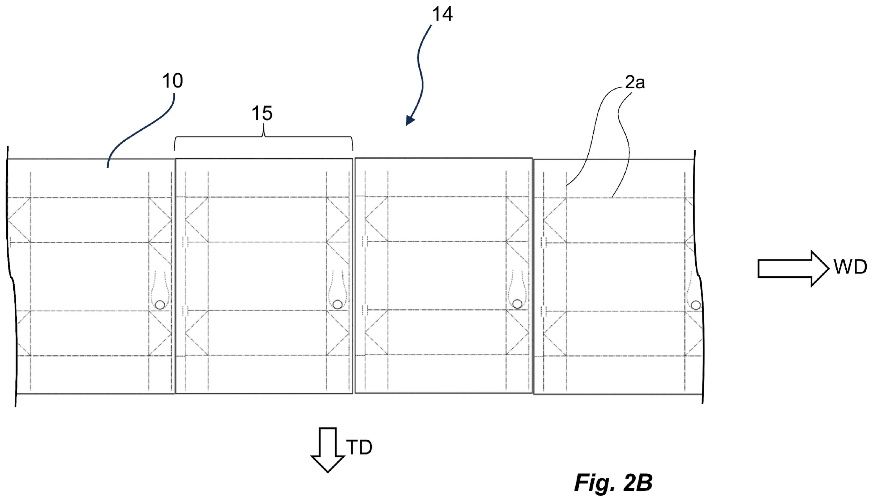

Fig. 2b shows an example of a packaging material 10 for use with e.g. the machine 1 shown in Fig. 1, and suitable to form e.g. the packaging containers 2 shown in Fig. 2a. The packaging material 10 is provided as a web 14 of consecutive segments 15 arranged in a feeding direction, or web direction, WD. A transverse direction TD is defined as a direction being transverse to the web direction WD. Each segment 15 is designed to form a single packaging container 2, e.g. using a machine 1 of the type described with reference to Fig. 1. In such a case, the segments 15 are connected until the final packaging container 2 is formed and cut loose from the upstream web 14 of packaging material 10. Optionally, each segment 15 is provided as a blank before being fed to a forming and filling machine for producing packaging containers 2.

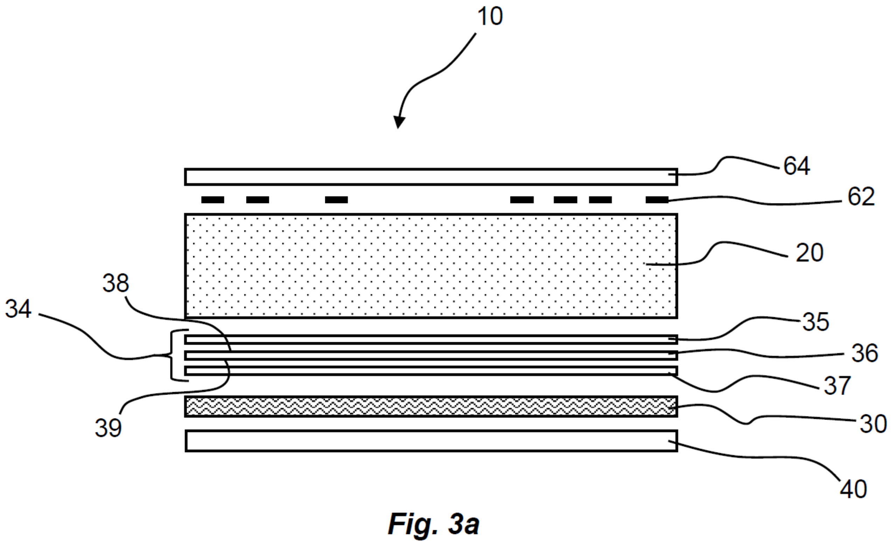

The packaging material 10 is shown in detail in Fig. 3a. The packaging material 10 comprises a base layer 20 of paper or paperboard or other cellulose-based material, and a barrier layer 30. The barrier layer 30 may be a metal foil such as aluminium foil, or it may optionally be a polymer-based or cellulose-based material provided with a metal coating (not shown) on a side of the barrier layer 30 facing away from the base layer 20.

The packaging material 10 comprises a polymer multilayer 34. In this example, the polymer multilayer 34 comprises three layers 35, 36, 37, however embodiments exist with at least two layers. A first polymer layer 36 of the polymer multilayer 34 comprises recycled polymer. The first polymer layer 36 has a first side 38 that is covered by the second polymer layer 35 of the polymer multilayer 34.The first polymer layer 36 has a second side 39 that is covered by the third polymer layer 37 of the polymer multilayer 34.The first side 38 and the second side 39 are opposite to each other. The polymer multilayer 34 extends along the plane of the remaining layers of the laminated packaging material 10.

The polymer multilayer 34 is arranged between the base layer 20 and the barrier layer 30 to form a lamination layer.

In this example, the barrier layer 30 is further provided with an inner layer 40 acting as a protective inside coating, intended to face the interior of a packaging container. The inner layer 40 is preferably one or more polymer layers, such as polyethylene.

The opposite side of the base layer 20 is provided with one or more outside layers 64 intended to face the exterior of a packaging container formed by the packaging material 10. A décor print 62 may be provided onto the base layer 20, and covered by the one or more outside layers 64. The décor print 62 can be provided by flexographic printing using a suitable ink and/or the décor print may comprise a magnetizable ink distributed in a manner to be used for certain function. In other examples, the décor print can be provided by digital printing. The outside layer 64 can comprise polyethylene and/or other polymers.

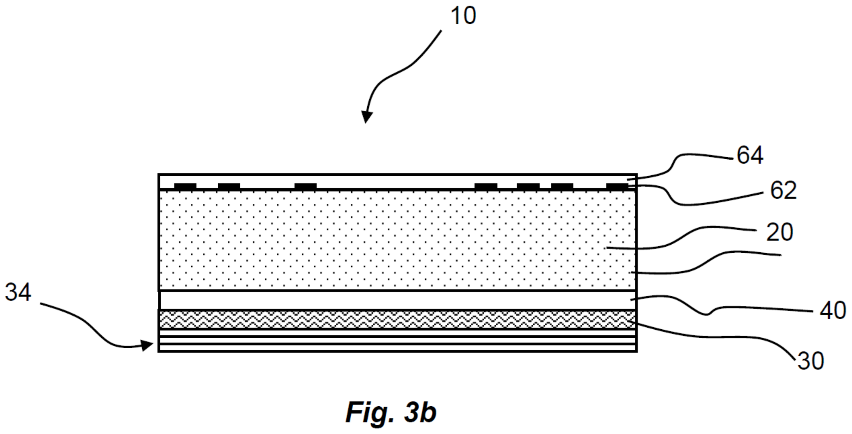

Fig. 3b shows a different example of a packaging material 10 of the type shown in Fig. 3a, wherein the polymer multilayer 34 is arranged onto the barrier layer 30 facing inwards to form an interior layer of the packaging material 10.

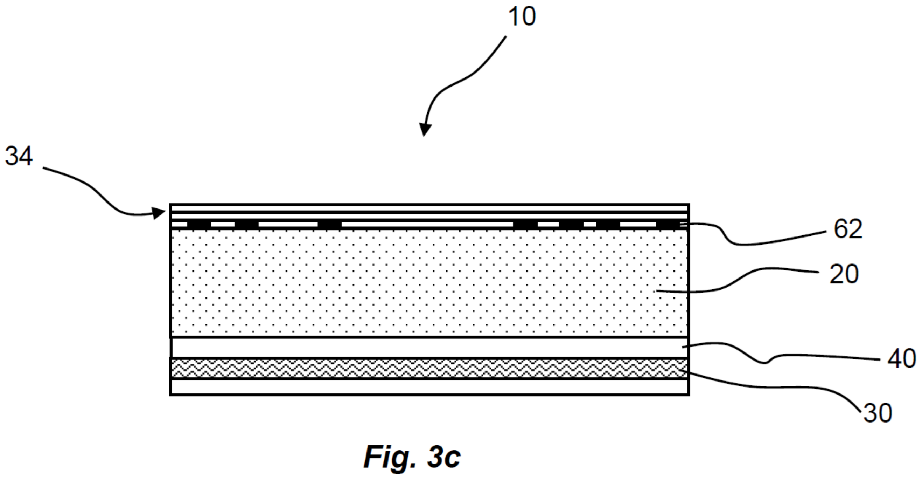

Fig. 3c shows another different example of the packaging material of the type shown in Fig. 3a, wherein the polymer multilayer 34 is arranged onto the base layer 20 to form an exterior layer of the packaging material 10.

Alternatively or additionally, the base layer 20 may be provided with at least one crease line (2a. The at least one crease line (2a) forms a defect in the base layer 20 which forms a local reduction of robustness, thereby allowing the packaging material 10 to easily fold around the crease line. Typically, the base layer 20 is provided with both crease lines (2a) and through holes, such that the same packaging material 10 can be used to form a single packaging container 2. It should further be noted that the features shown in Figs. 3a-c are not necessarily to scale but the dimensions applications of the various layers may be varied depending on material choice and intended.

While the position of the polymer multilayer 34 has been described with reference to Figs. 3a-c, it should be noted that these examples could be combined in any combination with regards to the polymer multilayer 34. Accordingly, a packaging material 10 may be formed by having a first polymer multilayer 34 forming the inner side of the packaging material 10, having a second polymer multilayer 34 between the base layer 20 and the barrier layer 30, and/or having a third polymer multilayer 34 forming the exterior side of the packaging material 10.

Further, the examples described with reference to Figs. 3a-c show polymer multilayers 34 having a recycled polymer embedded on both sides by virgin polymer. It should however be realized that a polymer multilayer may be formed by a first polymer layer comprising recycled polymer, and a second polymer layer arranged on one side only of the first polymer layer. In other examples the polymer multilayer 34 may comprise a first polymer layer comprising recycled polymer, and several polymer layers arranged on one or both sides of the first polymer layer. To give one specific example only, the second polymer layer 35 shown in Fig. 3a could be omitted.

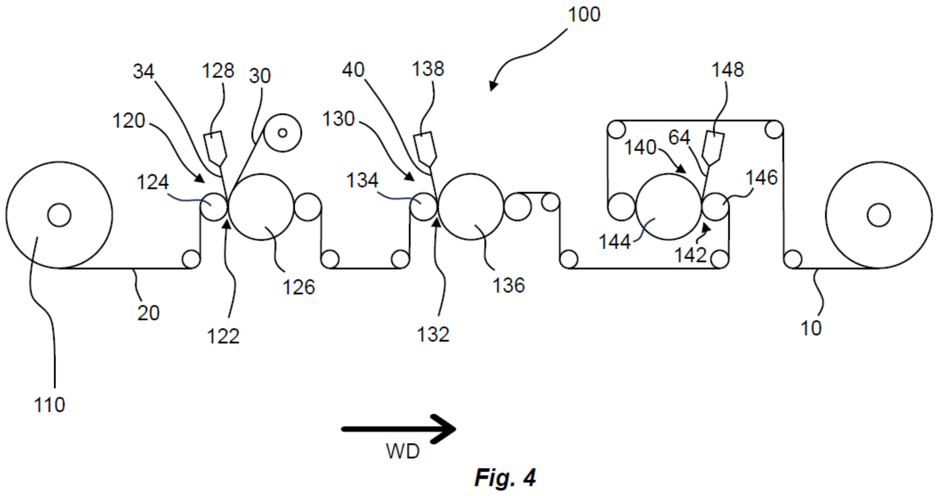

Fig. 4 illustrates a packaging material lamination system 100. The system 100 can comprise any suitable components and be configured to perform any method described herein.

In the shown example, packaging material lamination system 100 is configured to produce a packaging material 10 as has been previously described, operating in the production direction WD.

Starting to the left in Fig. 4, the packaging material lamination system 100 comprises a base layer feeding unit 110. The base layer feeding unit 110 may for example comprise a roll of the base layer 20, as well as any suitable pulling or guiding mechanism for pulling the base layer 20 forward in the production direction WD.

The packaging material lamination system 100 further comprises a plurality of lamination units 120, 130, 140. With respect to the production direction WD, a first lamination unit 120 comprises a nip 122 formed between two adjacent rollers 124, 126. As shown in Fig. 4, the base layer 20 is fed through said nip 122 together with a barrier layer 30 and a lamination layer 34. The lamination layer 34, here representing a polymer multilayer, is forming a lamination layer between the base layer 20 and the barrier layer 30 as in Fig. 3a. The lamination layer 34 is provided by an extrusion device 128.

The semi-finished packaging material 10, at this point formed by a base layer 20, a barrier layer 30, and a lamination layer 34 arranged between the base layer 20 and the barrier layer 30, is fed to a downstream lamination unit 130. The second lamination unit 130 comprises a nip 132 formed between two adjacent rollers 134, 136. As shown in Fig. 4, the semi-finished packaging material is fed through said nip 132 together with an inner layer 40. The inner layer 40 is provided by an extrusion device 138 and forms a layer arranged onto the barrier layer 30.

The semi-finished packaging material 10, at this point formed by a base layer 20, a barrier layer 30, a lamination layer 34 arranged between the base layer 20 and the barrier layer 30, and a protective polymer inner layer 40, is fed to a downstream lamination unit 140. The third lamination unit 140 comprises a nip 142 formed between two adjacent rollers 144, 146. As shown in Fig. 4, the semi-finished packaging material is fed through said nip 142 together with an exterior layer 64. The exterior layer 64 is provided by an extrusion device 148 and forms an outer layer arranged onto the base layer 20.

It should be noted that the above description represents a packaging material lamination system 100 configured to form a packaging material 10 as was described with reference to Fig. 3a. However, any and each of the extrusion devices 128, 138, 148 could be configured to provide a polymer multilayer 34 thereby forming a packaging material 10 as was described with any of Figs. 3a-c, or any combination of such.

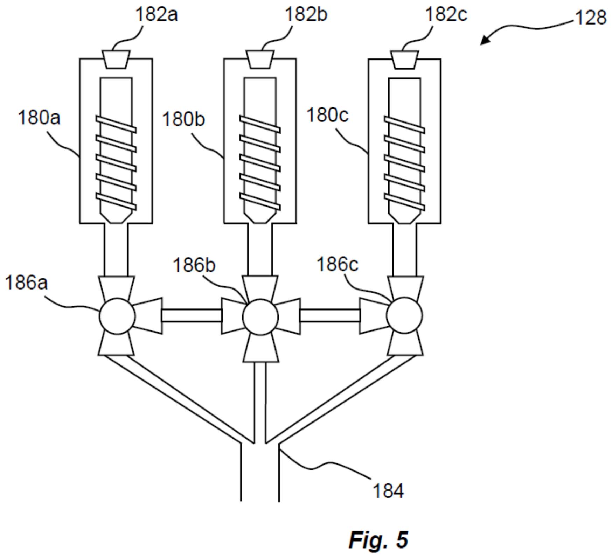

Fig. 5 illustrates an extrusion device 128. The extrusion device 128 is a co-extrusion device configured to provide a polymer multilayer 34. The co-extrusion device 128 functions to simultaneously extrude several polymers into the polymer multilayer 34. The co-extrusion device 128 shown in Fig. 5 features three separate extruders 180a-c and three polymer feed inlets 182a-c, although embodiments featuring two or more extruders 180 as well as one or more polymer feed inlets 182 may be equally possible. In co-extrusion, each one of several polymers is extruded in a separate extruder 180a-c, and the polymers are organized into the polymer multilayer 34 when passing through a downstream extrusion die 184.

In order to product a polymer multilayer 34 having a first polymer layer of recycled polymer, at least one polymer feed inlet 182 is fed with the recycled polymer.

The extrusion device further comprises control means, here in the form of three valves 186a-c. Each valve 186a-c is a multiway valve enabling control of the polymer flow. Hence, by controlling the valves 186a-c, it is possible to design the polymer multilayer 34, in particular with regards to where the recycled polymer will be located in the polymer multilayer 34.

While the example shown in Fig. 5 is particularly suitable for producing a polymer multilayer with three layers or less, the extrusion device 128 could be easily adapted for producing polymer multilayer with additional layers.

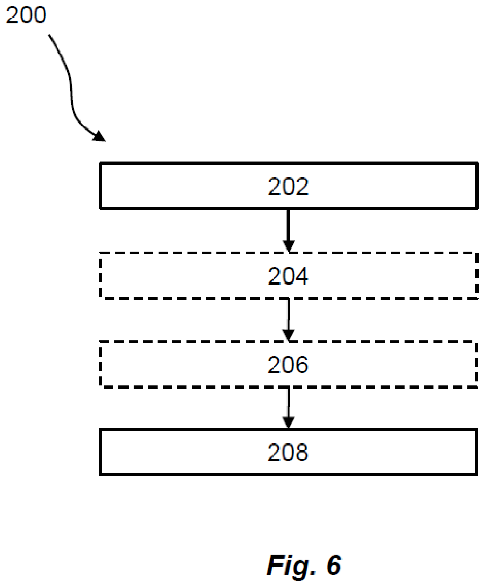

Fig. 6 illustrates a flowchart representing a method 200 for producing a laminated packaging material, such as the ones illustrated in Figs. 3a-3c. The flowchart shows 4 steps, but it should be noted that not all of them are mandatory; the optional steps are illustrated with dashed outlines. The method steps are shown sequentially, however, some or all of them may be carried out simultaneously and/or in a different order than shown.

The method comprises providing 202 a cellulose based base layer, and applying 208 a polymer multilayer, wherein at least a first polymer layer of the polymer multilayer comprises recycled polymer.

In some embodiments, the method 200 comprises co-extruding 204 the first polymer layer with a second polymer layer and/or a third polymer layer of the polymer multilayer.

In some embodiments, the method 200 comprises co-extruding 206 the first polymer layer with a second polymer layer and a third polymer layer of the polymer multilayer, wherein the second polymer layer and the third polymer layer are co-extruded on opposite sides of the first polymer layer.

The steps of co-extruding 204 and 206 may be mutually exclusive.

The method may be performed by a lamination system such as the one shown in Fig. 4.

From the description above follows that, although various embodiments of the invention have been described and shown, the invention is not restricted thereto, but may also be embodied in other ways within the scope of the subject-matter defined in the following claims.

### List of reference numerals:

- 1: Machine
- 2: Packaging container
- 2a: Crease line
- 2b: Opening feature
- 2c: Tab
- 3: Sterilization section
- 4: Tube-forming section
- 5: Filling section
- 6: Transversal sealing section
- 10: Packaging material
- 14: Web of packaging material
- 15: Segment
- 20: Base layer
- 30: Barrier layer
- 34: Polymer multilayer
- 35: Second polymer layer
- 36: First polymer layer
- 37: Third polymer layer
- 38: First side
- 39: Second side
- 40: Inner layer
- 62: Décor print
- 64: Exterior layer
- 100: Lamination system
- 110: Base layer feeding unit
- 120: Lamination unit
- 122: Nip
- 124: Roller
- 126: Roller
- 128: Extrusion device
- 130: Lamination unit
- 132: Nip
- 134: Roller
- 136: Roller
- 138: Extrusion device
- 140: Lamination unit
- 142: Nip
- 144: Roller
- 146: Roller
- 148: Extrusion device
- 180: Extruder
- 182: Polymer feed inlet
- 184: Extrusion die
- 186: Valve
- TD: Transverse direction
- WD: Web direction

## Claims

1. A laminated packaging material (10) comprising a cellulose based base layer (20) and a polymer multilayer (34);
wherein at least a first polymer layer (36) of the polymer multilayer (34) comprises recycled polymer.

2. The laminated packaging material (10) according to claim 1, wherein the first polymer layer (36) is covered on a first side (38) by a second polymer layer (35) of the polymer multilayer (34).

3. The laminated packaging material (10) according to claim 2, wherein the first polymer layer (36) is covered on a second side (39) by a third polymer layer (37) of the polymer multilayer (34).

4. The laminated packaging material (10) according to claim 2 or 3, wherein the second polymer layer (35) and/or the third polymer layer (37) of the polymer multilayer (34) comprises virgin polymer.

5. The laminated packaging material (10) according to any of the preceding claims, wherein the first polymer layer (36) of the polymer multilayer (34) consists of recycled polymer.

6. The laminated packaging material (10) according to any of the preceding claims, wherein the recycled polymer comprises a mechanically and/or a chemically recycled polymer, preferably the recycled polymer is post-consumer recycled polymer.

7. The laminated packaging material (10) according to any of the preceding claims, wherein the recycled polymer is recycled polyethylene, preferably recycled low-density polyethylene, LDPE, more preferably recycled linear low-density polyethylene, LLDPE.

8. The laminated packaging material (10) according to claim 7, wherein the first polymer layer (36) of the polymer multilayer (34) comprises tubular LLDPE, or a combination of tubular LLDPE and autoclave LLDPE.

9. The laminated packaging material (10) according to any of the preceding claims, further comprising a barrier layer (30), and wherein the polymer multilayer (34) is:
arranged onto the base layer (20) to form an exterior layer of the packaging material (10), and/or
between the base layer (20) and the barrier layer (30) to form a lamination layer, and/or
onto the barrier layer (30) to form an interior layer of the packaging material (10).

10. The laminated packaging material (10) according to claim 9, wherein the barrier layer (30) is at least one of a metallic layer, a cellulose layer having a metal coated side surface, and a polymer layer having a metal coated side surface.

11. A packaging container (2), comprising a body (12) formed by folding and sealing a packaging material according to any of the preceding claims.

12. A method (200) for producing a laminated packaging material, the method comprising:
providing (202) a cellulose based base layer (20); and
applying (208) a polymer multilayer (34), wherein at least a first polymer layer (36) of the polymer multilayer (34) comprises recycled polymer.

13. The method according to claim 12, further comprising co-extruding (204) the first polymer layer (36) with a second polymer layer (35) and/or a third polymer layer (37) of the polymer multilayer (34).

14. The method according to claim 12, further comprising co-extruding (206) the first polymer layer (36) with a second polymer layer (35) and a third polymer layer (37) of the polymer multilayer (34), wherein the second polymer layer (35) and the third polymer layer (37) are co-extruded on opposite sides of the first polymer layer (36).

15. A lamination system (100) configured to produce a laminated packaging material (10), the lamination system (100) comprising:
at least one nip (122, 132, 142), each nip (122, 132, 141) formed between two adjacent rollers (124, 126, 134, 136, 144, 146);
a base layer feeding unit (110) providing a supply of a cellulose based base layer (20) to one of said at least one nip (122, 132, 142); and
an extrusion device (128, 138, 148) providing a polymer multilayer (34) comprising at least a first polymer layer (36) comprising recycled polymer, and wherein the extrusion device (128, 138, 148) feeds the polymer multilayer (34) to one of said at least one nip (122, 132, 142).

16. The lamination system (100) according to claim 15, wherein the extrusion device (128, 138, 148) comprises a co-extrusion unit.

17. The lamination system (100) according to claim 16, wherein the co-extrusion unit (128, 138, 148) is configured to extrude the first polymer layer (36), and a second and a third polymer layer (35, 37) arranged on opposite sides of the first polymer layer (36).
